# EUROPÄISCHE PATENTSCHRIFT

(11) **EP 0 729 419 B1**
(45) Veröffentlichungstag und Bekanntmachung des Hinweises auf die Patenterteilung: **29.03.2000**
(21) Anmeldenummer: 94914333.3
(22) Anmeldetag: 06.05.1994
(51) Int. Cl.: B60T 17/00, B01D 53/26

(54) **TROCKNUNGSPATRONE FÜR LUFTTROCKNUNGSANLAGEN, INSBESONDERE FÜR DRUCKLUFTBREMSANLAGEN VON FAHRZEUGEN**
DRYING CARTRIDGE FOR AIR DRYING INSTALLATIONS, ESPECIALLY FOR VEHICLE AIR-BRAKE SYSTEMS
CARTOUCHE DE SECHAGE POUR INSTALLATIONS DE SECHAGE DE L'AIR, NOTAMMENT POUR SYSTEMES DE FREINAGE A AIR COMPRIME DE VEHICULES

(30) Priorität: 22.11.1993 DE 4339758
(43) Veröffentlichungstag der Anmeldung: 04.09.1996
(73) Patentinhaber: KNORR-BREMSE Systeme für Nutzfahrzeuge GmbH, 80809 München (DE)
(72) Erfinder: UNGER, Hans, D-85716 Unterschleissheim (DE); HATZ, Wolfgang, D-80933 München (DE); TSCHEWIK, Herbert, D-85778 Haimhausen (DE)
(86) Internationale Anmeldenummer: DE9400531
(87) Internationale Veröffentlichungsnummer: WO9514598

(56) Entgegenhaltungen:
- EP-A- 0 275 201
- GB-A- 2 126 124
- US-A- 3 796 025

## Beschreibung

Die Erfindung betrifft eine Trocknungspatrone nach dem Gattungsbegriff des Patentanspruchs 1. Eine solche Trocknungspatrone ist in der EP 0 275 21 A1 offenbart.

Bei Trocknungspatronen, welche ihrer Verwendung nach als 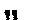 Wegwerfpatrone" bezeichnet werden, ist an der Unterseite eines Topfes ein Stirndeckel befestigt, z. B. durch eine Bördelverbindung oder im Falle der EP 0 275 201 A2 durch eine Schraubverbindung, wobei der Stirndeckel mittig ein Gewinde zum Fixieren der Patrone an einem Trocknergehäuse aufweist. Es sind Mittel vorhanden, welche verhindert, daß das Granulat bzw. Trocknungsmittel durch die Mitte nach außen entweichen kann; somit ist die Trocknungspatrone ohne besondere Vorkehrungen handhabbar, d. h. sie kann nach dem Abschrauben vom Trocknergehäuse zwischengelagert oder als Wegwerfteil verwendet werden. Die für derartige Trocknungspatronen zur Anwendung gelangenden Stirndeckel bzw. deren Bördelverbindungen mit dem Topf der Trocknungspatrone sind als aufwendig hinsichtlich des Materials und hinsichtlich der Materialstärke zu bezeichnen. Eine getrennte Entsorgung des Filter- und Granulatmaterials bzw. die Wiederverwendung der in der Trocknungspatrone befindlichen weiteren Einzelteile ist infolge der unlösbaren Bördelverbindung bzw. der zu lösenden Schraubverbindung nur mit unverhältnismäßig hohem Aufwand möglich; die Trocknungspatrone ist demnach ausschließlich als Wegwerfteil in Benutzung.

Bei der Fertigung von Trocknungspatronen der in Rede stehenden Art erlangen die Forderungen nach möglichst weitgehender Umweltverträglichkeit in zunehmendem Maße Bedeutung. So ist es infolge der Rost-Langzeitwirkung unerwünscht, verunreinigte, d. h. mit Ölpartikeln angereicherte Trocknungspatronen in größerer Anzahl als Wegwerfteile zu lagern und einer Deponie zuzuführen.

Davon ausgehend besteht die Aufgabe der Erfindung darin, eine Trocknungspatrone der in Rede stehenden Art so auszugestalten, daß den erhöhten Anforderungen des Umweltschutzes in vermehrtem Maße Rechnung getragen werden kann. Es soll im besonderen möglich sein, eine kostengünstige Entsorgung des in der Trocknungspatrone befindlichen Filter- und Granulatmaterials vorzunehmen, ohne daß es erforderlich wäre, zeitaufwendige Demontagearbeiten am Topf der Patrone vorzunehmen. Andererseits soll sichergestellt sein, daß die Trocknungspatrone nach dem Lösen vom Trocknergehäuse als bauliche Einheit gehandhabt werden kann, ohne daß Filter- oder Granulatmaterial aus dem Inneren der Patrone entweicht.

Zur Lösung dieser Aufgabe dienen die Merkmale nach dem Kennzeichnungsteil des Patentanspruchs 1. Der Stirnteil ist relativ zum Außentopf der Trocknungspatrone verschiebbar, derart, daß bei vom Trocknergehäuse demontierter Trocknerpatrone durch Verschieben des Stirndeckels ein Lösen der Befestigungsanordnung und in der Folge ein Herausnehmen der Bestandteile aus dem Inneren der Patrone ermöglicht ist.

Trotz Verwendung des relativ zum Außentopf verschiebbaren, mit diesem also lösbar verbundenen Stirndeckels ist es möglich, die Trocknungspatrone als bauliche Einheit, also getrennt vom Trocknergehäuse, zu handhaben; durch die Verschieblichkeit des Stirndeckels ist es andererseits möglich, die mittels Klemm- oder Reibsitz bestehende Verbindung gegenüber der Mittelschraube der Patrone zu lösen, so daß im Falle des Bedarfs eine kostengünstige Herausnahme aller Einzelteile der Patrone und damit die Möglichkeit der Entsorgung des Filter- und Granulatmaterials gegeben ist.

Vorteilhafte Ausgestaltungen und Weiterbildungen sind in weiteren Patentansprüchen aufgeführt.

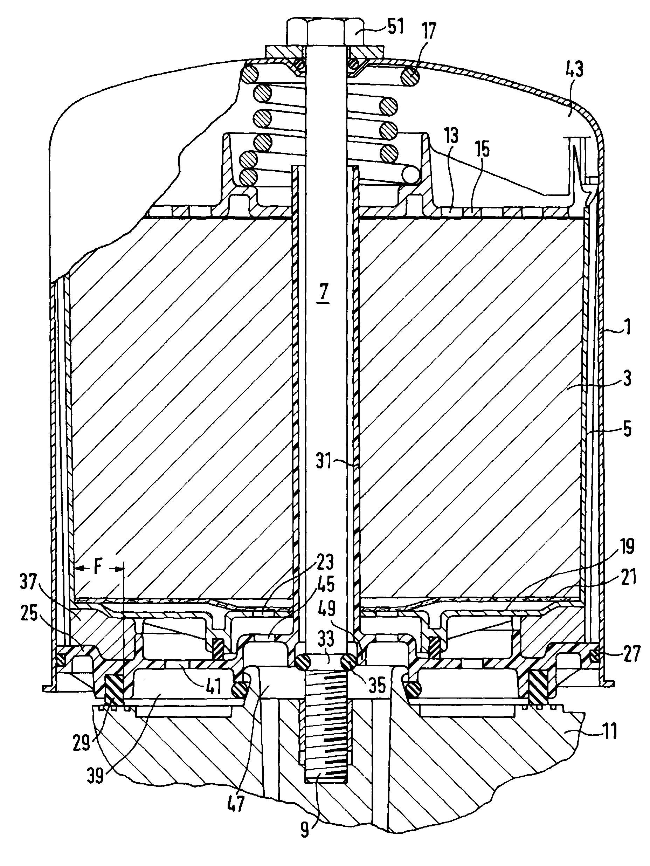

Die Erfindung ist nachfolgend anhand eines Ausführungsbeispiels unter Bezugnahme auf die beigefügte einzige Zeichnung erläutert.

Die Zeichnung zeigt in Schnittansicht die Trocknungspatrone nach der Erfindung.

Die in der Zeichnung dargestellte Trocknungs- bzw. Filterpatrone gemäß der Erfindung weist einen Außentopf 1 auf, innerhalb welchem sich ein Trockenmittel 3 enthaltender Innentopf 5 befindet. Eine Mittelschraube 7 erstreckt sich zentral durch die Trocknungspatrone, wobei das am unteren Ende der Mittelschraube befindliche Gewinde 9 in nachfolgend beschriebener Weise zum Verschrauben der Trocknungspatrone mit dem in der Zeichnung teilweise wiedergegebenen Trocknergehäuse 11 dient. An der Oberseite des Innentopfes 5 ist ein Öffnungen 13 aufweisender Deckel 15 eingehängt und relativ zu diesem verschieblich; eine Druckfeder 17 wirkt zwischen dem Außentopf 1 und dem Deckel 15, derart, daß das innerhalb des Innentopfes 5 befindliche Trockenmittel in vorbestimmter Weise verdichtet werden kann. Der Boden 19 des Innentopfes trägt ein Drahtsieb 21 oder ein Vlies, welches verhindert, daß das Trockenmittel durch den Boden durchsetzende Öffnungen 23 austreten kann.

Unterhalb des Bodens 19 befindet sich ein Stirndeckel 25, welcher innerhalb des Außentopfes 1 verschiebbar und gegenüber diesem mittels einer Ringdichtung 27 abgedichtet ist. An der Unterseite trägt der Stirndeckel 25 einen Dichtungsring 29, welcher z.B. als Flachdichtung ausgebildet ist und im montierten Zustand der Trocknungspatrone gegenüber der zugewandten Stirnfläche des Trocknergehäuses 11 abdichtet.

Der Stirndeckel ist vorzugsweise materialeinheitlich mit einem Zentralrohr 31 verbunden, welches sich zentral durch die Trocknungspatrone erstreckt und die Mittel schraube 7 aufnimmt. In eine am unteren Ende der Mittelschraube eingearbeitete Ringnut 33 ist ein O-Ring 35 eingesetzt. Der O-Ring 35 hält die Trocknungspatrone in nachfolgend beschriebener Weise zusammen, wenn diese nicht auf dem Trocknergehäuse 11 montiert ist.

Zwischen dem Boden 19 des Innentopfes 5 und dem Stirndeckel 25 ist im Außenbereich ein Vorfilter 37 von Ringform eingesetzt. Die zu trocknende Luft gelangt gemäß Darstellung in der Zeichnung über eine (nicht dargestellte) Verbindung in die unterhalb des Stirndeckels 25 befindliche Kammer 39; von dort passiert die Luft im Stirndeckel 25 befindliche Öffnungen 41 und gelangt in den Vorfilter 37. Nach Austritt aus dem Vorfilter strömt die vorgefilterte Luft im ringförmigen Zwischenraum zwischen Außentopf und Innentopf nach oben gerichtet in die Kammer 43. Aus der Kamer 43 strömt die Luft durch die im Deckel 15 befindlichen Öffnungen 13 nach unten und passiert das eigentliche Trockenmittel 3 der Patrone. Sie gelangt nach Passieren der Öffnungen 23 des Bodens 19 und der Öffnungen 45 des Stirndeckels 25 in eine Kammer 47, von welcher sie über Kanäle in das Trocknergehäuse zum Zwecke der Weiterleitung an einen Druckmittelvorrat eintritt.

Wie vorstehend erwähnt ist, hält der O-Ring 35 die Trocknungspatrone zusammen, wenn diese nicht auf dem Trocknergehäuse 11 montiert ist. Im weiteren besitzt der O-Ring 35 die wesentliche Aufgabe, trockene und nasse Luft voneinander zu trennen, da innerhalb des zwischen der Mittelschraube und dem Zentralrohr bestehenden Ringraumes nasse Luft aus der Kammer 43 eintritt und eine absolut wirksame Abdichtung gegenüber der in der Kammer 47 bestehenden trockenen Luft erforderlich ist. Um diese Abdichtung zu erreichen, ist der O-Ring 35 mit ausreichender Vorspannung zwischen der Ringnut 33 und einem am unteren Ende des Zentralrohrs befindlichen hülsenförmigen Fortsatz 49 gehaltert. Andererseits ermöglicht der O-Ring 35 eine geringfügige Relativbewegung zwischen dem Stirndeckel und dem Außentopf derart, daß sich der O-Ring 35 innerhalb des Fortsatzes 49 aus der in der Zeichnung dargestellten Position etwas nach oben gerichtet verlagern kann, wenn die Mittelschraube 7 durch Drehen des Schraubkopfes 51 vom Trocknergehäuse 11 gelöst wird. Im Verlaufe dieses Lösens bewegt sich der Stirndeckel 25 relativ zum Außentopf etwas nach unten gerichtet, da sich die Druckfeder 17 entspannt und gleichzeitig die Pressung des Trockenmittels 3 freigegeben wird. Nach dem Lösen der Trocknungspatrone wird diese, wie vorstehend erläutert, in ihrer Gesamtheit mittels des dichtenden O-Ringes 35 zusammengehalten; die Trocknungspatrone kann in ihrer Gesamtheit gehandhabt werden, d.h. es ist möglich, sie einer Wartung zuzuführen, wobei ein Austausch des Trockenmittels 3 und des Vorfilters 37 als auch ein Reinigen des Topfinneren möglich ist. Um in das Innere der Trocknungspatrone nach der Erfindung zu gelangen, ist es lediglich erforderlich, mit geeigneten Werkzeugen den Stirndeckel soweit in die Patrone nach innen gerichtet zu verschieben, bis der O-Ring 35 aus seinem Klemmeingriff mit dem Fortsatz 49 freikommt und durch geeignete Mittel aus der Ringnut 33 herausgehoben werden kann. Nachfolgend ist es möglich, die Mittelschraube von der Oberseite her aus der Trocknungspatrone herauszuziehen, wonach der Stirndeckel, der Vorfilter und der Innentopf von der Unterseite her aus der Trocknungspatrone herausgenommen werden. Der Vorfilter und das Trockenmittel können der Entsorgung zugeführt werden, während die übrigen Einzelteile der Trocknungspatrone nach gegebenenfalls erforderlicher Reinigung wieder verwendbar sind.

Die zur Befestigung der Trocknungspatrone am Trocknergehäuse erforderliche Kraft wird durch die Verschraubung der Mittelschraube mit dem Trocknergehäuse, also durch den Gewindeeingriff des Gewindes 9 sichergestellt. Aus diesem Grund kann der Stirndeckel vergleichsweise schwach dimensioniert sein und aus Kunststoff bestehen, was im Vergleich zu herkömmlichen Patronen, bei welchen die Befestigung durch Gewindeeingriff am Stirndeckel selbst geschieht, von besonderem Vorteil ist. Der der Erfindung innewohnende Gedanke der lösbaren Befestigung des Stirndeckels an der Patrone ist auch bei andersgearteter Konstruktion des Innentopfes verwirklicht. Die Dichtwirkung der Patrone gegenüber dem Trocknergehäuse wird durch die Anpressung mittels der Druckfeder 17 unter Verschraubung durch die Mittelschraube erreicht. Eine weitere Verstärkung der Dichtwirkung wird dadurch erzielt, daß der in der Trocknungspatrone existierende Innendruck auf der in der Zeichnung mit F bezeichneten Differenz-Ringfläche nach unten gerichtet zur Wirkung kommt; eine verstärkte Anpressung des Dichtungsringes 29 gegenüber dem Trocknergehäuse ist hierdurch erzielbar. Die Haltekraft des O-Rings 35 gegenüber dem Zentralrohr bzw. dessen Fortsatzes 49 ist bei ausreichender Härte des für den O-Ring 35 gewählten Gummimaterials vollständig ausreichend, d.h. die Trocknungspatrone kann nach Lösen vom Trocknergehäuse als eine handhabbare Einheit transportiert und weiterer Bearbeitung bzw. Wartung zugeführt werden.

### Bezugszeichenliste

- 1: Außentopf
- 3: Trockenmittel
- 5: Innentopf
- 7: Mittelschraube
- 9: Gewinde
- 11: Trocknergehäuse
- 13: Öffnung
- 15: Deckel
- 17: Druckfeder
- 19: Boden
- 21: Drahtsieb
- 23: Öffnung
- 25: Stirndeckel
- 27: Ringdichtung
- 29: Dichtungsring
- 31: Zentralrohr
- 33: Ringnut
- 35: O-Ring
- 37: Vorfilter
- 39: Kammer
- 41: Öffnung
- 43: Kammer
- 45: Öffnung
- 47: Kammer
- 49: Fortsatz
- 51: Schraubkopf

## Patentansprüche

1. Trocknungspatrone für Lufttrocknungsanlagen, insbesondere für Druckluftbremsanlagen von Fahrzeugen, mit einem in einem Außentopf (1) gehalterten, ein Trockenmittel (3) enthaltenen Innentropf (5), und mit einem an der Unterseite des Innentopfes (5) vorgesehenen Stirndeckel (25), welcher in Montageposition am Trocknergehäuse (11) gegenüber diesem abdichtet, wobei
a) der Stirndeckel (25) ist zur Befestigung mit dem Trocknergehäuse (11) an einer die Trocknungspatrone axialmittig durchsetzenden Mittelschraube schnelllöslich gehaltert;
b) die Mittelschraube (7) trägt an ihrem Ende ein zum Verschrauben mit dem Trocknergehäuse (11) dienendes Gewinde (9); und
**dadurch gekennzeichnet, daß**
c) der Stirndeckel (25) relativ zum Außentopf (1) der Trocknungspatrone verschiebbar ist.

2. Trocknungspatrone nach Anspruch 1, dadurch gekennzeichnet, daß die Befestigungsanordnung aus einem unter Krafteinwirkung lösbaren Reib- bzw. Klemmsitz zwischen Stirndeckel (25) und Mittelschraube (7) besteht.

3. Trocknungspatrone nach Anspruch 1 oder 2, gekennzeichnet durch folgende Merkmale:
a) der Stirndeckel (25) ist unter Abdichtung begrenzt gegenüber dem Innenumfang des den Innentopf (5) aufnehmenden Außentopfes (1) verschiebbar und trägt mittig ein Zentralrohr (31), durch welches sich die Mittelschraube (7), erstreckt wobei das dem Gewinde (9) entgegengesetzte Ende der Mittelschraube (7) außerhalb des Außentopfes einen Schraubkopf trägt, mittels welchem das Gewinde (9) mit dem Trocknergehäuse (11) verschraubbar ist; und
b) im Bereich des Durchtritts der Mittelschraube (7) durch die Ebene des Stirndeckels (25) ist ein O-Ring (35) vorgesehen, welcher in einer Ringnut (33) der Mittelschraube sitzt und unter dichtendem Klemm- bzw. Reibsitz in einem axialen Fortsatz (49) des Zentralrohrs (31) verschiebbar gehaltert ist.

4. Trocknungspatrone nach Anspruch 3, dadurch gekennzeichnet, daß der Stirndeckel in an sich bekannter Weise Öffnungen (41) zum Eintritt von zu trocknender Luft und Öffnungen (45) für den Austritt von getrockneter Luft aufweist, und daß an der Unterseite des Stirndeckels ein gegenüber dem Trocknungsgehäuse (11) wirkender Dichtungsring (29) eingesetzt ist.

5. Trocknungspatrone nach einem der vorangehenden Ansprüche, dadurch gekennzeichnet, daß der Stirndeckel (25) aus Kunststoff besteht.

6. Trocknungspatrone nach einem der vorangehenden Ansprüche, dadurch gekennzeichnet, daß bei vom Trocknergehäuse abgenommener Trocknungspatrone der Zugriff in das Innere derselben durch Lösen des O-Rings aus dem Klemm- bzw. Reibsitz ermöglicht ist

## Claims

1. Drying cartridge for air drying installations, especially for vehicle air-brake systems, comprising an inside receptacle (5) mounted in an outside receptacle (1) and containing a drying agent (3), and comprising a front end cover (25) provided on the underside of said inside receptacle (5), which cover provides a seal from the drier housing (11) in the mounting position thereon, wherein
(a) for fastening on said drier housing (11) said front end cover (25) is held for quick release on a central screw passing axially centrally through said drying cartridge;
(b) said central screw (7) carries on its end a thread (9) serving for screw connection on said drier housing (11); and
**characterised in that**
(c) said front end cover (25) is displaceable relative to said outside receptacle (1) of said drying cartridge.

2. Drying cartridge according to Claim 1, characterised in that the fastening system consists of a frictional or clamping fit, respectively, between said front end cover (25) and said central screw (7), which can be released under the action of force.

3. Drying cartridge according to Claim 1 or 2, characterised by the following features:
(a) said front end cover (25) is displaceable, to a restricted extent, relative to the inner periphery of said outside receptacle (1) accommodating said inside receptacle (5), whilst it is sealed therefrom, and carries a central tube (31) in the centre through which said central screw (7) extends, with the end of said central screw (7) which is opposite to said thread (9) carries a screw head outside said outside receptacle by means of which said thread (9) can be screwed onto said drier housing (11); and
(b) in the region of the passage of said central screw (7) through the plane of said front end cover (25) an O-ring (35) is provided which is seated in an annular groove (33) of said central screw and is held for displacement, with sealing clamping or frictional fit, in an axial extension (49) of said central tube (31).

4. Drying cartridge according to Claim 3, characterised in that said front end cover presents, in a manner known per se, openings (41) for the entry of air to be dried and openings (45) for the discharge of dried air, and that a sealing ring (29) acting relative to said drier housing (11) is inserted on the underside of said front end cover (29).

5. Drying cartridge according to any of the preceding Claims, characterised in that said front end cover (25) consists of a synthetic resin.

6. Drying cartridge according to any of the preceding Claims, characterised in that when the drying cartridge is removed from said drier housing the access into the interior of the cartridge is possible when said O-ring is released from the clamping or frictional fit.

## Revendications

1. Cartouche de séchage pour installations de séchage de l'air, notamment pour systèmes de freinage à air comprimé de véhicules, comprenant un récepteur intérieur (5) monté dans un récepteur extérieur (1) et contenant un produit dessiccateur (3), et comprenant un couvercle frontal (25) disposé au côté inférieur dudit récepteur intérieur (5), lequel couvercle établit une étanchéité relativement au carter du dessiccateur (11) dans la position de montage sur le dernier, dans lequel
(a) pour sa fixation sur ledit carter du dessiccateur (11), ledit couvercle frontal (25) est tenu, pour un desserrage rapide, sur une vis centrale qui s'étend axialement et centralement à travers la cartouche de séchage;
(b) ladite vis centrale (7) porte, sur son extrémité, un filet (9) qui sert à la fixation par vissage sur ledit carter du dessiccateur (11); et
**caractérisée en ce que**
(c) ledit couvercle frontal (25) est déplaçable relativement audit récepteur extérieur (1) de la cartouche de séchage.

2. Cartouche de séchage selon la revendication 1, caractérisée en ce que le système de fixation consiste en un ajustement à frottement ou respectivement pressé entre ledit couvercle frontal (25) et ladite vis centrale (7), qui est apte à être desserré sous l'action d'un effort.

3. Cartouche de séchage selon la revendication 1 ou 2, caractérisée par les caractéristiques suivantes:
(a) ledit couvercle frontal (25) est déplaçable, à un degré limité, relativement à la périphérie intérieure dudit récepteur extérieur (1), qui reçoit ledit récepteur intérieur (5), en étant rendu étanche, et porte un tube central (31) dans son centre, à travers duquel s'étend ladite vis centrale (7), l'extrémité de ladite vis centrale (7), qui est opposée audit filet (9), portant une tête de vis à l'extérieur dudit récepteur extérieur, moyennant laquelle on peut visser ledit filet (9) sur ledit carter du dessiccateur (11); et
(b) dans la zone du passage de ladite vis centrale (7) par le plan dudit couvercle frontal (25), un anneau torique (35) est disposé, qui est logé dans une rainure annulaire (33) de ladite vis centrale et qui est tenu de façon déplaçable, à ajustement étanche pressé ou à frottement, dans une allonge axiale (49) dudit tube central (31).

4. Cartouche de séchage selon la revendication 3, caractérisée en ce que ledit couvercle frontal présente, d'une manière connue en soi, des ouvertures (41) pour l'entrée de l'air à sécher et des ouvertures (45) pour la sortie de l'air séché, et en ce qu'un anneau d'étanchéité (29), qui agit relativement audit carter du dessiccateur (11), est inséré dans la face inférieure dudit couvercle frontal (29).

5. Cartouche de séchage selon une quelconque des revendications précédentes, caractérisée en ce que ledit couvercle frontal (25) est fait d'une matière synthétique.

6. Cartouche de séchage selon une quelconque des revendications précédentes, caractérisée en ce que quand la cartouche de séchage est enlevée dudit carter du dessiccateur, l'accès à l'intérieur de la cartouche est possible quand ledit anneau torique est desserré de son ajustement pressé ou respectivement à frottement.
